# EUROPÄISCHE PATENTSCHRIFT

(11) **EP 0 385 291 B1**
(45) Veröffentlichungstag und Bekanntmachung des Hinweises auf die Patenterteilung: **21.04.1993**
(21) Anmeldenummer: 90103519.6
(22) Anmeldetag: 23.02.1990
(51) Int. Cl.: B62J 1/06, B62J 1/08, B62K 19/36

(54) **Gefederte Fahrrad-Sattelstützvorrichtung**
Spring suspension device for a bicycle saddle
Dispositif de support à ressort pour selle de bicyclette

(30) Priorität: 28.02.1989 DE 8902327 U
(43) Veröffentlichungstag der Anmeldung: 05.09.1990
(73) Patentinhaber: Papp, Karel, CZ-58652 Iihlava (CZ)
(72) Erfinder: Papp, Karel, CZ-58652 Iihlava (CZ)
(74) Vertreter: Fleuchaus, Leo, Dipl.-Ing.

(56) Entgegenhaltungen:
- DE-A- 3 436 070
- DE-U- 8 804 400
- FR-A- 872 359
- FR-A- 917 433

## Beschreibung

Die Erfindung betrifft eine gefederte Fahrrad-Sattelstützvorrichtung zur abgefederten Anordnung des Sattels auf dem Fahrradrahmen.

Aus der DE-OS 34 36 070 ist es bereits bekannt, unter Anwendung der üblichen Konstruktion mit einer im Sattelstützrohr des Rahmens teleskopartig geführten rohrförmigen Sattelstütze eine Federung vorzusehen, indem im Sattelstützrohr eine Druckfeder untergebracht ist, auf welcher sich die Sattelstütze abstützt. Um die Sattelstütze drehfest, aber längsverschieblich im Sattelstützrohr zu führen, weist das Sattelstützrohr einen sich über den Federweg erstreckenden axialen Schlitz auf, in welchen eine Nase der Sattelstütze eingreift. Diese recht Primitive bekannte Konstruktion hat aber den Nachteil, daß einerseits ein gewisses seitliches Spiel zwischen der Nase der Sattelstütze und dem axialen Führungsschlitz des Sattelstützrohrs funktionsnotwendig ist und deshalb ein entsprechendes Drehspiel des Sattels zwangsläufig gegeben ist. Dieses Drehspiel wirkt sich am Sattel, weil der Durchmesser der Sattelstütze ja relativ klein ist, aber relativ stark aus, so daß der Benutzer stets das Gefühl hat, auf einem wackeligen Sattel zu sitzen. Andererseits entsteht aber zwischen der Nase der Sattelstütze und dem Führungsschlitz des Sattelstützrohrs eine erhebliche Reibung, die möglicherweise zu ruckeligen Federbewegungen führt und auf jeden Fall starken Verschleiß bedingt. Die Ursache liegt wesentlich darin, daß beim Fahrradfahren der Sattel wechsel seitig beansprucht wird, weil die Beine abwechselnd Tretkraft auf die Pedale ausüben müssen und dabei auf den Sattel wechselweise eine Reaktionskraft mit einer seitwärts gerichteten Komponente wirkt, mit der Folge, daß die Nase abwechselnd auf der einen und der anderen Schlitzflanke anliegt und dort erhöhte Reibung erzeugt, was mit der Zeit notwendigerweise zu einem seitlichen Ausschlagen des Schlitzes führen muß. Abgesehen davon hat die bekannte Konstruktion aber auch den Nachteil, daß Regenwasser und Schmutz durch den Führungsschlitz in das Sattelstützrohr eindringen und in dessen Innerem sowie an der Feder nicht nur Verschmutzung, sondern vor allem Korrosion hervorrufen können, ohne daß eine zweckmäßige Möglichkeit der Reinigung oder Abhilfe gegeben ist.

In dem DE-Gbm 88 04 400 ist eine gefederte Sattelstützvorrichtung vorgeschlagen, bei welcher die Sattelstütze gegabelt ist und zwei symmetrisch beiderseits der Sattelstützachse parallel verlaufende Stützschenkel aufweist, denen jeweils ein Federdämpfer mit rohrförmigen Gehäuse zugeordnet ist, und die beiden Federdampfergehäuse sind lösbar und höhenverstellbar mittels einer Halterung am Sattelstützrohr montiert. Diese bekannte gefederte Sattelstützvorrichtung hilft den Nachteilen der zuvor erläuterten bekannten Sattelstützvorrichtung ab, denn durch die gegabelte Sattelstütze mit den beiden beiderseits angeordneten Federdämpfern wird eine drehspielfreie federnde Führung des Sattels erreicht, die einen ausgezeichneten Fahrkomfort ergibt. Außerdem sind die Federdämpfer durch ihre Gehäuse gekapselt.

Die letztere gefederte Sattelstützvorrichtung stellt an sich eine ausgezeichnete technische Lösung der gegebenen Probleme dar und ergibt auch eine ausgezeichnete Federwirkung des Sattels auf den Fahrradrahmen mit bestem Fahrkomfort für den Fahrer. Ihr einziger Nachteil liegt darin, daß sie konstruktiv verhältnismäßig aufwendig ist.

Der Erfindung liegt daher die Aufgabe zugrunde, eine gefederte Fahrrad-Sattelstützvorrichtung der in Rede stehenden Art konstruktiv derart auszubilden, daß bei einfacher Konstruktion der bestmögliche Fahrkomfort erreicht wird.

Diese Aufgabe wird gemäß der Erfindung durch die in Anspruch 1 gekennzeichnete Sattelstützvorrichtung gelöst.

Vorteilhafte Ausgestaltungen der Erfindung sind Gegenstand der Unteransprüche.

Die Erfindung wird nachstehend anhand eines Ausführungsbeispiels unter Bezugnahme auf die anliegenden Zeichnungen mehr im einzelnen beschrieben. in denen zeigt:
- Fig. 1: in Seitenansicht die gefederte Sattelstützvorrichtung mit aufgesetztem Sattel an einem ausschnittweise dargestellten Fahrradrahmen,
- Fig. 2: die gefederte Sattelstützvorrichtung ohne Sattel und ohne Rahmen in teilweise aufgeschnittener Darstellung in Frontansicht, und
- Fig. 3: die Sattelstützvorrichtung wiederum in teilweise aufgeschnittener Darstellung in Seitenansicht.

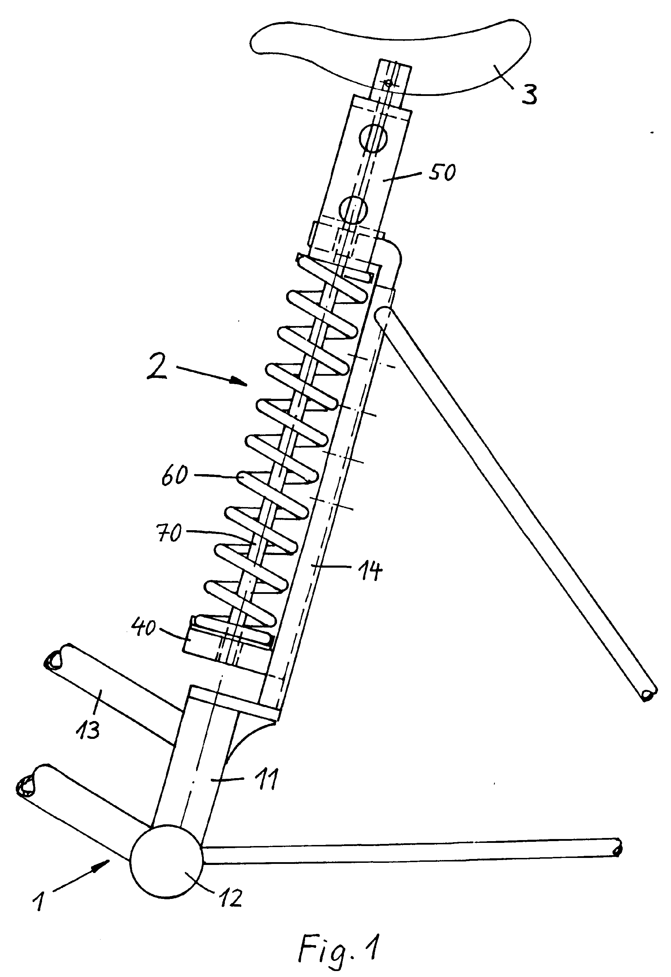

In Fig. 1 ist der Fahrradrahmen mit 1, die gefederte Sattelstützvorrichtung mit 2 und der Sattel mit 3 bezeichnet. Das Sattelstützrohr 11 des Rahmens 1 erstreckt sich vom Tretlager 12 nur um eine verhältnismäßig kurze Distanz in Rohrform nach oben, ist im Bereich seines oberen Endes mit dem Oberrohr 13 des Rahmens verbunden und geht dann in eine Montageplatte 14 über, die sich parallel zur Achse des Sattelstützrohrs 11, aber davon etwas nach hinten versetzt nach oben erstreckt und zum Anbringen der eigentlichen gefederten Sattelstützvorrichtung 2 derart dient, daß die Achse der Sattelstützvorrichtung 2 mit der Achse des Sattelstützrohrs 11 zusammenfällt.

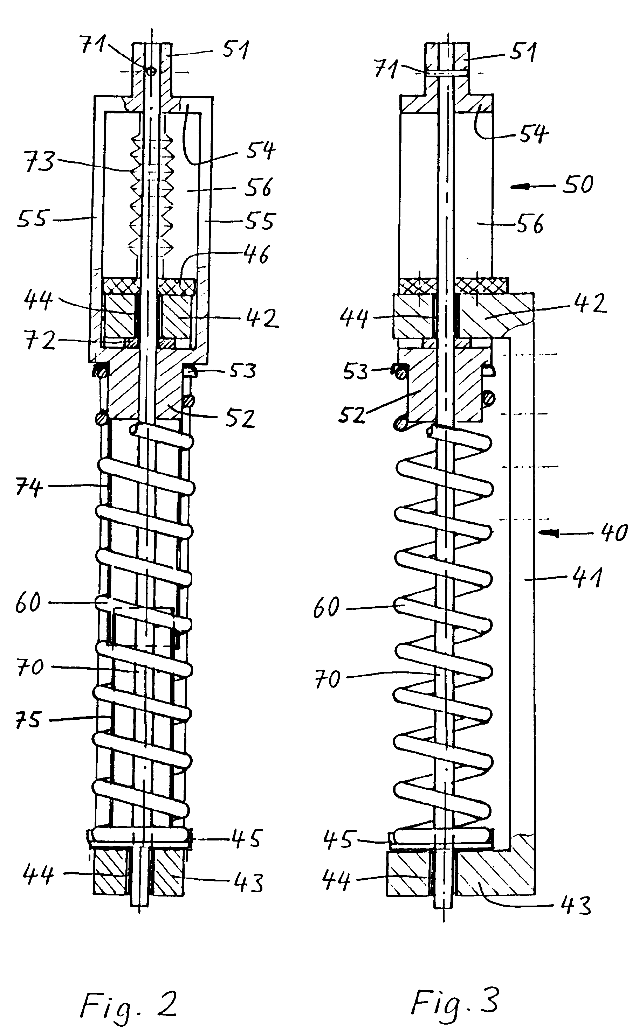

Die Sattelstützvorrichtung 2 weist (siehe besonders Fig. 3) einen an der Montageplatte 14 befestigten Bügel 40, einen den Sattel 3 tragenden Sattelstützkörper 50, eine Feder 60 und eine Führungsstange 70 auf. Der Bügel 40 und der Sattelstützkörper 50 sind vorzugsweise auf Aluminiumguß hergestellt. Die Befestigung des Bügels 40 an der Montageplatte 14 erfolgt zweckmäßig mit zwei Montageschrauben (nicht dargestellt), die zweckmäßigerweise durch in der Montageplatte gebildete Durchgangsbohrungen hindurchgesteckt und in Gewindebohrungen des Bügels 40 eingeschraubt werden. Damit der Bügel 40 zwecks Höhenverstellung des Sattels 3 in unterschiedlicher Höhenposition an der Montageplatte 14 angebracht werden kann, ist wenigstens eines der beiden Teile Montageplatte und Bügel mit einer Reihe von Bohrungen versehen, die jeweils um eine gegebene Höhenverstellschrittdistanz auseinanderliegen. Am jeweils anderen der beiden Teile Montageplatte und Bügel genügen dann zwei Bohrungen.

Der Bügel 40 weist einen plattenförmigen Teil 41, der an der Montageplatte 14 anliegt, und einen oberen Flansch 42 sowie einen unteren Flansch 43 auf. In den beiden Flanschen sind jeweils Bohrungen mit eingesetzten Gleitbuchsen 44 zur verschiebbaren Führung der Führungsstange 70 angeordnet. Der untere Flansch 43 trägt außerdem einen Federteller 45 zur Zentrierung und Abstützung des unteren Endes der Feder 60.

Der Sattelstützkörper 50 weist an seinem oberen Ende einen Zapfen 51 zur Befestigung des Sattels, und an seinem unteren Ende einen zapfenartigen Ansatz 52 auf, auf welchen das obere Ende der Feder 60 aufgeschoben ist und der einen oberen Federteller 53 zur Zentrierung und Abstützung des oberen Endes der Feder 60 trägt. Im übrigen, also zwischen den oberen Zapfen 51 und dem unteren Ansatz 52, hat der Sattelstützkörper 50 die Form eines kastenartigen Führungskörpers 54 mit zwei ebenen Seitenwänden 55, die parallel zueinander in Längsrichtung der Sattelstützvorrichtung verlaufen und symmetrisch beiderseits der Längsachse der Sattelstützvorrichtung 2 und des Sattelstützrohres 11 angeordnet sind. Vorne und hinten ist der Führungskörper 54 offen, wie Fig. 3 deutlich erkennen läßt, und wie aus den Figuren 2 und 3 hervorgeht, greift der obere Flansch 42 des Bügels 40 in den zwischen den beiden Seitenwänden 55 des Führungskörpers 54 gebildeten Führungskanal 56 ein. Er durchsetzt diesen Führungskanal auf seine ganze Tiefe und weist, wie Fig. 2 erkennen läßt, zueinander und zu den Seitenwänden 55 parallele Seitenflächen auf, hat aber dennoch ein gewisses Spiel zu den Seitenwänden 55, um eine Metall-Metall-Reibung zu vermeiden. Auf seiner Oberseite trägt der obere Bügelflansch 42 einen aus reibungs- und verschleißarmem Kunststoff, beispielsweise Polyamid, gefertigten Gleitkörper 46, der mit seinen Seitenflächen mit den Innenwandflächen der beiden Seitenwände 55 gleitend zusammenwirkt.

Der Sattelstützkörper 50 weist außerdem eine mittige Längsbohrung, welche die oberen und unteren Endbereiche des Führungskörpers 54 mit dem Zapfen 51 und dem Ansatz 52 durchzieht, zur Aufnahme der Führungsstange 70 auf. Die Führungsstange 70 ist, beispielsweise im Bereich des oberen Zapfens 51, wie dargestellt, (oder auch im Bereich des Ansatzes 52) durch einen Querstift 71 fest mit dem Sattelstützkörper 50 verbunden.

Bei Belastung des Sattels 3 gleitet der Sattelstützkörper 50, dessen unteres Ende auf dem oberen Ende der Feder 60 abgestützt ist, unter Zusammendrücken der Feder 60 nach unten, wobei sich Sattelstützkörper 50 und Führungsstange 70 gemeinsam relativ zu dem feststehenden Bügel 40 verschieben. Dies bedeutet, daß die Seitenwände 55 des Führungskörpers 54 entlang des feststehenden, mit dem oberen Bügelflansch 42 verbundenen Gleitkörper 46 gleiten und die Führungsstange 70 sich in den Führungsbuchsen 44 der beiden Bügelflansche 42 und 43 verschiebt. Das untere Ende der Führungsstange 70, das beim Abfedern nach unten aus dem unteren Bügelflansch 43 herausgleitet, bewegt sich dabei in das Sattelstützrohr 11 hinein und hat dort ungehinderte Bewegungsfreiheit, weil die freie Länge des Sattelstützrohrs 11 ohnehin größer als die Federweglänge ist. Die mögliche Federweglänge ist dabei durch die axiale Länge des Führungskanals 56 des Führungskörpers 54 bestimmt.

Ein Puffer 72, beispielsweise in Form einer Gummischeibe, der an der Unterseite des oberen Bügelflansches 42 oder an der Bodenfläche des Führungskanals 56 des Sattelstützkörpers 50 angebracht ist, verhindert einen harten Anschlag beim Zurückfedern des Sattelstützkörpers bei Entlastung des Sattels.

Zur optischen Verschönerung sowie zum Schutz gegen Zutritt von Staub und Nässe kann die Führungsstange 70 innerhalb des Führungskanals 56 des Führungskörpers 54 oberhalb des Gleitkörpers 46 von einem Faltenbalg 73 und im Bereich unterhalb des Sattelstützkörpers 50, also im Bereich der Feder 60, von einem Teleskoprohr umschlossen sein, dessen Teleskoprohrabschnitte 74 und 75 am Sattelstützkörper bzw. am unteren Bügelflansch 43 befestigt sind und bei Federbewegungen zusammengeschoben werden. Der Faltenbalg 73 und das Teleskoprohr 74, 75 sind zur Vereinfachung nur in Fig. 2 dargestellt.

## Patentansprüche

1. Gefederte Fahrrad-Sattelstützvorrichtung, mit einer den Sattel (3) tragenden Sattelstütze (50), einem die Sattelstütze (50) längsverschieblich führenden rahmenseitigen Bauteil (40), einer zwischen der Sattelstütze (50) und dem rahmenseitigen Bauteil (40) angeordneten Druckfeder, und mit an der Sattelstütze (50) und dem rahmenseitigen Bauteil (40) gebildeten, formschlüssig miteinander zusammenwirkenden Elementen (42, 46, 55) zur Sicherung der Sattelstütze gegen Relativdrehung gegenüber dem rahmenseitigen Bauteil, gekennzeichnet durch folgende Konstruktion:
a) das rahmenseitige Bauteil (40) hat die Gestalt eines U-förmigen Bügels mit einem längsverlaufenden, im wesentlichen plattenartigen und an einer Montageplatte (14) anzubringenden Hauptteil (41) und an dessen oberem und unteren Ende dazu abknickend angeordneten Flanschen (42, 43),
b) die Sattelstütze (50) weist einen etwa kastenartig gestalteten Führungskörper (54) mit zwei unter Bildung eines dazwischen verlaufenden Führungskanals (56) parallel angeordneten Seitenwänden (55) auf, welche zwischen sich den mit entsprechender Breite und parallelen Seitenflächen ausgebildeten und in den Führungskanal (56) eingreifenden oberen Flansch (42) des rahmenseitigen Bauteils (40) längsverschieblich, jedoch drehfest führen,
c) die Feder (60) ist zwischen dem unteren Flansch (43) des rahmenseitigen Bauteils (40) und dem unteren Ende (52) der Sattelstütze (50) angeordnet, und
d) eine mittige, längs der Verschiebeachse der Sattelstütze verlaufende Führungsstange (70) verläuft durch axial fluchtende Bohrungen des oberen und unteren Flansches (42, 43) des rahmenseitigen Bauteils (40) und der oberhalb und unterhalb des Führungskanals (56) befindlichen Bereiche (51, 52) der Sattelstütze (50) und ist an einem der beiden Bauteile Sattelstütze und rahmenseitiges Bauteil befestigt und in den Bohrungen des jeweils anderen Bauteils verschiebbar geführt.

2. Sattelstützvorrichtung nach Anspruch 1, dadurch gekennzeichnet, daß die Führungsstange (70) an der Sattelstütze (50) axial unverschieblich befestigt (71) und in den Bohrungen des oberen und unteren Flansches (42, 43) des rahmenseitigen Bauteils (40) jeweils mittels in diese Bohrungen eingesetzter Gleitbuchsen (44) verschieblich geführt ist.

3. Sattelstützvorrichtung nach Anspruch 1 oder 2, dadurch gekennzeichnet, daß der obere Flansch (42) des rahmenseitigen Bauteils (40) zwischen den beiden den Führungskanal (56) begrenzenden Seitenwänden (55) des Führungskörpers (54) der Sattelstütze (50) ein gewisses Spiel hat und einen Gleitkörper (46) aus verschleißarmem und reibungsarmem Kunststoff trägt, der im Zusammenwirken mit den Innenwandflächen der Seitenwände (55) des Führungskanals (56) die drehfeste längsverschiebliche Führung herstellt.

4. Sattelstützvorrichtung nach einem der Ansprüche 1 bis 3, dadurch gekennzeichnet, daß zwischen der Unterseite des oberen Flansches (42) des rahmenseitigen Bauteils (40) und der Bodenfläche des Führungskanals (56) der Sattelstütze (50) ein Puffer (72) aus weichelastischem Material angeordnet ist.

5. Sattelstützvorrichtung nach einem der Ansprüche 1 bis 4, dadurch gekennzeichnet, daß die Feder (60) auf dem unteren Flansch (43) des rahmenseitigen Bauteils (40) und am unteren Ende (52) der Sattelstütze (50) jeweils mittels eines zentrierenden und druckverteilenden Federtellers (45, 53) abgestützt ist.

6. Sattelstützvorrichtung nach einem der Ansprüche 1 bis 5, dadurch gekennzeichnet, daß die Führungsstange (70) im oberhalb des oberen Flansches (42) des rahmenseitigen Bauteils (40) befindlichen Bereich des Führungskanals (56) des Führungskörpers (54) der Sattelstütze (50) von einem Faltenbalg (73) umschlossen ist.

7. Sattelstützvorrichtung nach einem der Ansprüche 1 bis 6, dadurch gekennzeichnet, daß die Führungsstange (70) im Bereich der Feder (60) von einem innerhalb der Feder angeordneten Teleskoprohr mit einem oberen, an der Sattelstütze (50) befestigten Teleskoprohrabschnitt (74) und einem in dieses einschiebbaren unteren, am unteren Flansch (43) des rahmenseitigen Bauteils (40) befestigten unteren Teleskoprohrabschnitt (75) umschlossen ist.

8. Sattelstützvorrichtung nach einem der Ansprüche 1 bis 7, dadurch gekennzeichnet, daß der plattenartige Hauptteil (41) des rahmenseitigen Bauteils (40) entlang seiner Länge mit einer Reihe von mit bestimmter Abstandsteilung auseinanderliegenden Schraubenlöchern zur höhenverstellbaren Montage an der Montageplatte (14) versehen ist.

9. Sattelstützvorrichtung nach einem der Ansprüche 1 bis 8, dadurch gekennzeichnet, daß die Sattelstütze (50) und das rahmenseitige Bauteil (40) jeweils als Gußteile aus Aluminium oder einer Aluminiumlegierung hergestellt sind.

10. Sattelstützvorrichtung nach Anspruch 2, dadurch gekennzeichnet, daß die Führungsstange (70) mittels eines Querstifts (71) am oberen, als Zapfen (51) zur Anbringung des Sattels (3) ausgebildeten Ende der Sattelstütze (50) befestigt ist.

## Claims

1. Sprung bicycle saddle support device, with a seat pillar (50) bearing the saddle (3), a frame component (40), guiding the seat pillar (50) displaceably in a longitudinal direction, a compression spring situated between the seat pillar (50) and the frame component (40), and with members (42, 46, 55) formed on the seat pillar (50) and on the frame component (40), and which co-operate in a positively locking manner, in order to prevent the seat pillar from turning in relation to the frame component, characterised by the following design:
a) the frame component (40) is constructed in a U-shape with a longitudinally extending, essentially plate-like main component (41) to be attached to a mounting plate (14), the said main component having flanges (42, 43) placed on and angled away from its upper and lower ends,
b) the seat pillar (50) has a substantially box-shaped guiding body (54) with two side walls (55) which are arranged parallel so as to form a guide duct (56) extending therebetween, and which guide the upper flange (42) of the frame component (40) between them longitudinally displaceably but rotationally rigidly, the said flange (42) being formed with a corresponding width and paralles side faces and engaging in the guide duct (56),
c) the spring (60) is situated between the lower flange (43) of the frame component (40) and the lower end (52) of the seat pillar (50), and
d) a central guide rod extending along the displacement axis of the seat pillar passes through coaxial bores in the upper and lower flanges (42, 43) of the frame component (40) and on the areas (51, 52) of the seat pillar (50) above and below the guide duct (56), is secured to either the seat pillar or the frame component, and is guided displaceably into the bores of the respective other component.

2. A saddle support device according to claim 1, characterised in that the guide rod (70) is fixed (71) on the seat pillar (50) in an axially immovable manner, and is guided in a movable manner in the bores of the upper and lower flanges (42, 43) of the frame component (40), by means of guide bushes (44) inserted into the said bores in each case.

3. A saddle support device according to claim 1 or 2,
characterised in that the upper flange (42) of the frame component (40) has a certain amount of clearance between the two side walls (55) of the guide body (54) of the seat pillar (50) which define the guide duct (56), and the said upper flange (42) bears a sliding body (46) made of a low-wear and low-friction plastic, which co-operating with the interior wall surfaces of the side walls (55) of the guide duct (56), produces the rotationally rigid and longitudinally displaceable guidance.

4. A saddle support device according to any one of claims 1 to 3, characterised in that a buffer (72) made of flexible material is positioned between the underside of the upper flange (42) of the frame component (40) and the base surface of the guide duct (56) of the seat pillar (50).

5. A saddle support device according to any one of claims 1 to 4, characterised in that the spring (60) is supported on the lower flange of the frame component (40) and on the lower end (52) of the seat pillar (50) respectively by means of a centring compression-distributing spring plate (45, 53).

6. A saddle support device according to any one of claims 1 to 5, characterised in that the guide rod (70) is surrounded by a folding bellows (73) in that region of the guide duct (56) of the guide body (54) of the seat pillar (50) which is situated above the upper flange (42) of the frame component (40).

7. A saddle support device according to one of claims 1 to 6, characterised in that the guide rod (70) in the region of the spring (60) is surrounded by a telescopic pipe situated inside the spring, the said telescopic pipe having an upper portion (74) attached to the seat pillar (50) and a lower portion (75) which can be inserted into the upper portion (74) and which is attached to the lower flange (43) of the frame component (40).

8. A saddle support device according to one of claims 1 to 7, characterised in that the plate-like main component (41) of the frame component (40) is provided along its length with a row of screw holes situated at a defined distance from each other, the said screw holes allowing vertically adjustable assembly on the mounting plate (14).

9. A saddle support device according to one of claims 1 to 8, characterised in that the seat pillar (50) and the frame component (40) are each manufactured as cast parts made from aluminium or an aluminium alloy.

10. A saddle support device according to claim 2, characterised in that the guide rod (70) is secured by means of a transverse pin (71) on the upper end of the seat pillar (50), the said upper end being formed as a stud (51) for the attachment of the saddle (3).

## Revendications

1. Dispositif porte-selle à suspension pour bicyclette, comportant une tige de selle (50) qui porte la selle (3), un élément (40) du cadre qui assure le guidage en translation de la tige de selle (50), un ressort de compression qui est monté entre la tige de selle (50) et l'élément (40) du cadre ainsi que des éléments (42, 46, 55) prévus sur la tige de selle (50) et l'élément (40) du cadre qui coopèrent par conjugaison de forme pour immobiliser la tige de selle en rotation par rapport à l'élément du cadre, caractérisé par la construction suivante:
a) l'élément (40) du cadre a la forme d'un étrier en U avec une partie principale (41) essentiellement en forme de plaque qui s'étend dans la direction longitudinale, se monte sur une plaque réceptrice (14) et porte à ses extrémités inférieure et supérieure des pattes (42, 43 ) coudées,
b) le tube de selle (50) comporte un élément de guidage (54) sensiblement en forme de caisson avec deux parois latérales (55) parallèles qui forment entre elles un conduit de guidage (56), lesquelles parois guident en translation, sans possibilité de rotation, la patte (42) supérieure de l'élément (40) du cadre, dont la largeur est adaptée, qui comporte des faces parallèles et pénètre dans le conduit de guidage (56),
c) le ressort (60) est placé entre la patte (43) inférieure de l'élément (40) du cadre et l'extrémité inférieure (52) de la tige de selle (50) et
d) une tige de guidage (70) centrale qui s'étend parallèlement à l'axe de la tige de selle à travers des perçages alignés axialement des pattes (42, 43) supérieure et inférieure de l'élément (40) et des parties (51, 52) de la tige de selle (50) situées au-dessus et au-dessous du conduit de guidage (56) et est fixée sur l'un des deux éléments de la tige de selle et sur l'élément du cadre tandis qu'elle est guidée en translation dans les perçages de l'autre élément.

2. Dispositif porte-selle selon la revendication 1, caractérisé par le fait que la tige de guidage (70) est fixée sans possibilité de déplacement dans la direction axiale sur la tige de selle (50) et est guidée avec possibilité de déplacement en translation dans les perçages des pattes (42, 43) supérieure et inférieure de l'élément (40) du cadre au moyen de douilles de glissement (44) montées dans lesdits perçages.

3. Dispositif porte-selle selon la revendication 1 ou 2, caractérisé par le fait que la patte (42) supérieure de l'élément (40) du cadre présente un certain jeu par rapport aux deux parois latérales (55) de l'élément (54) qui délimitent le conduit de guidage (56) et porte une pièce de frottement (46) en matière plastique à faibles taux d'usure et coefficient de frottement qui, en coopérant avec les surfaces intérieures des parois latérales (55) du conduit de guidage (56), assure le guidage en translation, sans possibilité de rotation.

4. Dispositif porte-selle selon l'une des revendications 1 à 3, caractérisé par le fait qu'un coussin (72) en matériau souple élastique est interposé entre la face inférieure de la patte (42) supérieure de l'élément (40) du cadre et le fond du conduit de guidage (56) de la tige de selle (50).

5. Dispositif porte-selle selon l'une des revendications 1 à 4, caractérisé par le fait que le ressort (60) prend appui sur la patte (43) inférieure de l'élément (40) du cadre et sur l'extrémité (52) inférieure de la tige de selle (50) par l'intermédiaire chaque fois d'une assiette à ressort (45, 53) qui assure le centrage et la répartition de la pression.

6. Dispositif porte-selle selon l'une des revendications 1 à 5, caractérisé par le fait que, dans la partie du conduit (56) de l'élément de guidage (54) de la tige de selle (50) située au-dessus de la patte (42) supérieure de l'élément (40), la tige de guidage (70) est entourée par un soufflet (73).

7. Dispositif porte-selle selon l'une des revendications 1 à 6, caractérisé par le fait que, dans la région du ressort (60), la tige de guidage (70) est entourée par un tube télescopique qui est monté à l'intérieur du ressort et, par une partie (74) supérieure de tube télescopique, est fixé sur la tige de selle (50) et, par une partie (75) inférieure de tube télescopique, sur la patte (43) inférieure de l'élément (40) du cadre.

8. Dispositif porte-selle selon l'une des revendications 1 à 7, caractérisé par le fait que la partie principale (41) en forme de plaque de l'élément (40) est pourvue sur sa longueur d'une série de trou de vis distants les uns des autres afin de permettre un réglage en hauteur sur la plaque de montage (14).

9. Dispositif porte-selle selon l'une des revendications 1 à 8, caractérisé par le fait que la tige de selle (50) et l'élément (40) du cadre sont respectivement des pièces moulées en aluminium ou en alliage d'aluminium.

10. Dispositif porte-selle selon la revendication 2, caractérisé par le fait que la tige de guidage (70) est fixée au moyen d'une goupille transversale (71) sur l'extrémité supérieure de la tige de selle (50) en forme de têton (51), agencée pour recevoir la selle (3).
